(19) Europäisches Patentamt
European Patent Office
Office européen des brevets

(11) EP 3 315 028 B1

(12) **EUROPEAN PATENT SPECIFICATION**

(45) Date of publication and mention of the grant of the patent:
**02.09.2020 Bulletin 2020/36**

(21) Application number: **16195993.7**

(22) Date of filing: **27.10.2016**

(51) Int Cl.:
*A01P 15/00* (2006.01)
*A01N 43/16* (2006.01)
*A01P 21/00* (2006.01)
*A01N 37/08* (2006.01)
*A01N 43/80* (2006.01)
*A01N 37/44* (2006.01)
*A01N 43/90* (2006.01)

(54) **USE OF INHIBITORS OF NLP PROTEINS AS PHYTOPHARMACEUTICALS FOR PLANT PATHOGEN CONTROL**

VERWENDUNG VON INHIBITOREN VON NLP PROTEINEN ALS PHYTOPHARMAKA ZUR BEKÄMPFUNG PFLANZLICHER PATHOGENE

UTILISATION D'INHIBITEUR DE NLP PROTEINES COMME AGENT PHYTOPHARMACEUTIQUES POUR LE CONTRÔLE D'UN AGENT PATHOGENE VEGETAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.05.2018 Bulletin 2018/18**

(73) Proprietors:
- **Kemijski Institut**
  **1000 Ljubljana (SI)**
- **Univerza v Ljubljani**
  **1000 Ljubljana (SI)**
- **Eberhard Karls Universität Tübingen**
  **72074 Tübingen (DE)**

(72) Inventors:
- **Anderluh, Gregor**
  **1000 Ljubljana (SI)**
- **Podobnik, Marjetka**
  **1290 Grosuplje (SI)**
- **Lenarcic, Tea**
  **1000 Ljubljana (SI)**
- **Hodnik, Vesna**
  **4209 Zabnica (SI)**
- **Gobec, Stanislav**
  **1000 Ljubljana (SI)**
- **Brus, Boris**
  **1235 Radomlje (SI)**
- **Sosic, Izidor**
  **1000 Ljubljana (SI)**
- **Nürnberger, Thorsten**
  **72070 Tübingen (DE)**
- **Albert, Isabell**
  **72076 Tübingen (DE)**
- **Böhm, Hannah**
  **72070 Tübingen (SI)**

(74) Representative: **Zacco GmbH**
**Bayerstrasse 83**
**80335 München (DE)**

(56) References cited:
**WO-A1-96/16954**
**WO-A2-2010/116259**
**WO-A2-2010/116264**
**CN-A- 104 069 092**

- **Scot Nelson: "Plant Disease Aug. 2008 PD-45 Late Blight of Tomato (Phytophthora infestans)", , 1 January 2008 (2008-01-01), XP055320702, Retrieved from the Internet: URL:http://www.ctahr.hawaii.edu/oc/freepub s/pdf/PD-45.pdf [retrieved on 2016-11-17]**
- **Anonymous: "PITG_20502 histone-lysine N-methyltransferase, putative [Phytophthora infestans T30-4] - GenScript", , 22 July 2010 (2010-07-22), XP055321454, Retrieved from the Internet: URL:http://www.genscript.com/gene/phytopht hora-infestans-t30-4/9480346/pitg_20502.ht ml [retrieved on 2016-11-21]**
- **Metalife ET AL: "EHMT2 | (2R,4R)-2-(6-methyl-4-oxochromen-3-yl)-1,3 -thiazolidin-3-ium-4-carboxylate - Drug2Gene", , 3 October 2016 (2016-10-03), XP055321441, Retrieved from the Internet: URL:http://drug2gene.info/relation/1031498 21 [retrieved on 2016-11-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- GIJZEN M ET AL: "Nep1-like proteins from plant pathogens: Recruitment and diversification of the NPP1 domain across taxa", PHYTOCHEMISTRY, PERGAMON PRESS, GB, vol. 67, no. 16, 1 August 2006 (2006-08-01), pages 1800-1807, XP028059844, ISSN: 0031-9422, DOI: 10.1016/J.PHYTOCHEM.2005.12.008 [retrieved on 2006-08-01]
- OH SOO-JIN ET AL: "Development of selective blockers for Ca2+-activated Cl- channel using Xenopus laevis oocytes with an improved drug screening strategy", MOLECULAR BRAIN, BIOMED CENTRAL LTD, LONDON UK, vol. 1, no. 1, 29 October 2008 (2008-10-29), page 14, XP021045964, ISSN: 1756-6606, DOI: 10.1186/1756-6606-1-14
- CLÉMENTINE FÉAU ET AL: "Novel Flufenamic Acid Analogues as Inhibitors of Androgen Receptor Mediated Transcription", ACS CHEMICAL BIOLOGY, vol. 4, no. 10, 16 October 2009 (2009-10-16), pages 834-843, XP055338761, US ISSN: 1554-8929, DOI: 10.1021/cb900143a
- Ben Coxworth: "Scientists find key to more effective DEET alternatives", , 3 October 2013 (2013-10-03), XP055339564, Retrieved from the Internet: URL:http://newatlas.com/natural-deet-alternatives-mosquitoes/29280/ [retrieved on 2017-01-26]

## Description

### TECHNICAL FIELD OF THE INVENTION

The present invention falls within the scope of phytopharmacy and relates to compounds that can serve as inhibitors of NLPs (Nep1-like proteins) and can be used for the control of plant pathogens, e.g. for controlling oomycetes of the genus *Phytophthora* causing potato or tomato blight. More specifically, the invention relates to the use of compounds of the formula (I) or general formula (II) as inhibitors of NLP protein and to their use for the prevention of plant diseases caused by plant pathogens, which use NLP proteins in their toxicity mechanism.

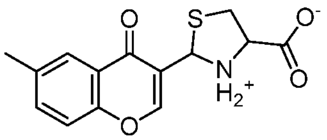
(I)

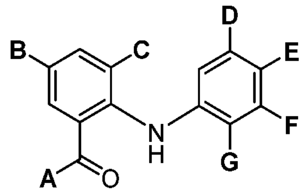
(II)

### TECHNICAL PROBLEM

Various compounds are used for the control of plant pathogens. For some it is believed that they are able to reduce pathogen infection by increasing the immunity of the host. However, for most of the compounds the mechanism of action is not known and there may be possible side effects for the host plants. There is a constant need for new agents to combat the most pressing plant pathogens, which will target specific molecules or processes in the metabolism of pathogenic microorganisms.

### STATE OF THE ART

Proteins belonging to the family of NLPs ("Nep1 (Necrosis and Ethylene Inducing Peptide) -like proteins") are produced by bacteria, fungi and oomycetes and there are several hundred known representatives. The vast majority of species of microorganisms that secrete NLPs are plant pathogens (Gijzen et al., 2006, Phytochemistry, 67(16):1800-7). Pathogen microorganisms use NLPs in invasion of plant tissues, eliciting immune response and for causing cell death. The actual mechanism of action of NLP proteins is not yet known. They are virulence factors and allow growth of the pathogen on target plants and the development of the disease. They act by direct action on the lipid membranes of plant cells (Ottmann et al., 2009, Proc Natl Acad Sci U S A, 106(25):10359-64). The structure of NLPs is similar to structures of fungal lectins and actinoporins, cytolytic toxins secreted by sea anemones (Ottmann *et al*., 2009). The similarity in the structure indicates the possibility that NLPs act as cytolytic agents against plant cells. It is still not known which part of the NLP molecule interacts with the surface of plant cells and which parts are responsible for toxic activity.

Toxic effects of NLPs on plant tissues are primarily exhibited as necrosis. Upon injection of a protein in a plant tissue, e.g. leaves, extensive necrosis occurs after few hours. Necrosis occurs even when plants are sprayed with a solution of NLP proteins (Jennings et al., 2001, Plant Sci, 161: 891-899). Plant pathogens produce a variety of diseases in infected plants. Among the most important representatives of plant pathogens are oomycetes of the genus *Phytophthora.* They are causing a variety of diseases that affect vegetable and ornamental plants, and some tree species. They can cause rotting of the roots or stems, can prevent the growth of seedlings, and quite often also blight. *P. infestans* causes potato or tomato blight (Agrios, 2005, Plant Pathology, 5th Edition), *P. capsici* can cause rotting of peppers and pepper blight. NLPs were also found in the fungus, *Moniliophthora perniciosa,* causing witches broom disease on cocoa plants (Zaparolli et al., 2011, Biochemistry, 50(45):9901-10). Some other pathogens can damage the xylem, which leads to wilting of hops, peppers and other crops (e.g. fungi of the genus *Verticillium*), etc. Pathogenic microorganisms can also completely destroy the crops. It is known that plant pests damage or destroy nearly a third of the crops annually worldwide. The annual loss, despite the use of plant protection products, has not decreased since 1940.

NLPs may represent an important molecular target for the development of new phytopharmaceutical products due to their important role in the infection mechanisms of plant pathogens and their broad presence in bacteria, fungi and oomycetes. Currently, some organic molecules (e.g. Mancozeb, Metalaxyl, Fosetyl-Aluminium) or inorganic compounds, such as copper sulphate, copper hydroxide or zinc ions are used for the suppression of some of these pathogens (e.g. potato and tomato blight caused by *P. infestans*). All of these compounds act non-specifically on proteins by the chemical modification of certain amino acids. Mancozeb reacts with the -SH groups of cysteines, thereby inactivating the proteins. Metalaxyl acts as an RNA synthesis inhibitor in ribosomes. Fosetyl-Aluminium belongs to the family of

phosphonates that act mostly be chelating cations. Similarly, copper ions and compounds containing sulphur act indiscriminately on all cells. Use of these compounds can be problematic from the viewpoint of the impact on the plant cells, other organisms and the environment in general. A more suitable approach would be targeted to molecules specific for plant pathogens and to identify and develop inhibitors of their activity. Pharmaceutical preparations that are currently on the market are mostly directed to a single organism (or at least a whole genus), while the compounds targeted to suppress necrotic functioning of NLPs would work much broader and act upon microorganisms from very diverse taxonomic groups.

## SUMMARY OF THE INVENTION

The present invention can be summarized by the following items:

1. Use of a compound of formula (I) as inhibitor of NLP proteins

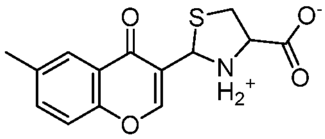

(I) .

2. Use of a compound of general formula (II) as inhibitor of NLP proteins

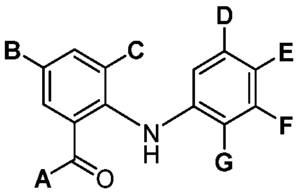

(II) ,

wherein:

A is selected from the group consisting of OH,

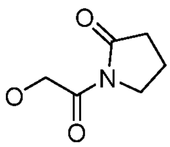 , 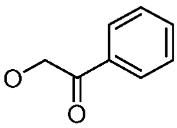 ,

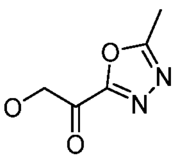 , 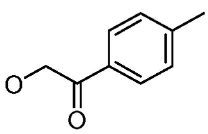

and

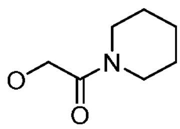 ;

B is selected from the group consisting of H, OH, OMe, SH, SMe, COOH, NH2, Me, Et, i-Pr, Pr, t-Bu, Bu, i-Bu, F, Cl, Br, CN, CF3 and NO2;

C is selected from the group consisting of H, OH, OMe, SH, SMe, COOH, NH2, Me, Et, i-Pr, Pr, t-Bu, Bu, i-Bu, F, Cl, Br, CN, CF3 and NO2;

D is selected from the group consisting of H, OH, OMe, SH, SMe, COOH, NH2, Me, Et, i-Pr, Pr, t-Bu, Bu, i-Bu, F, Cl, Br, CN, CF3 and NO2;

E is selected from the group consisting of H, OH, OMe, SH, SMe, COOH, NH2, Me, Et, i-Pr, Pr, t-Bu, Bu, i-Bu, F, Cl, Br, CN, CF3 and NO2;

F is selected from the group consisting of H, OH, OMe, SH, SMe, COOH, NH2, Me, Et, i-Pr, Pr, t-Bu, Bu, i-Bu, F, Cl, Br, CN, CF3 and NO2; and

G is selected from the group consisting of H, OH, OMe, SH, SMe, COOH, NH2, Me, Et, i-Pr, Pr, t-Bu, Bu, i-Bu, F, Cl, Br, CN, CF3 and NO2;

and wherein substituents F and G can form together an additional five-membered ring, where F and G are nitrogen atoms.

3. Use according to item 2, wherein the compound is selected from the group consisting of

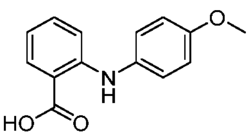 , 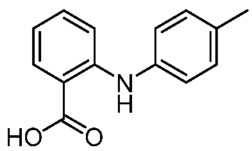 , 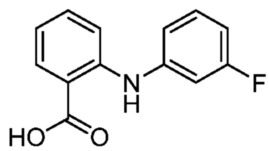

and

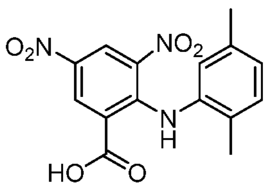 .

4. Use according to item 2, wherein the compound is

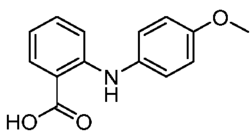 .

5. Use according to item 2, wherein the compound is

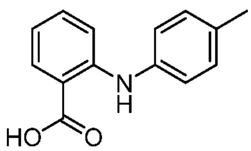 .

6. Use according to item 2, wherein the compound is

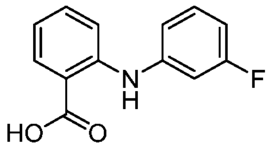

.

7. Use according to item 2, wherein the compound is

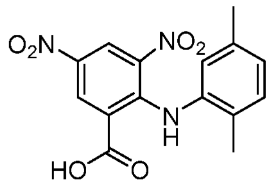

.

8. Use of a compound of formula (I) for the prevention of a plant disease which is caused by a plant pathogen that expresses an NLP protein

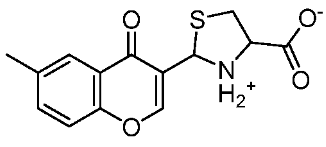

(I)

.

9. Use of a compound of general formula (II) for the prevention of a plant disease which is caused by a plant pathogen that expresses an NLP protein

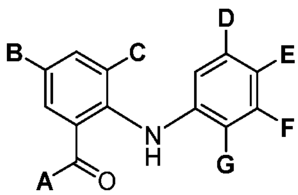

(II)

,

wherein:

A is selected from the group consisting of OH,

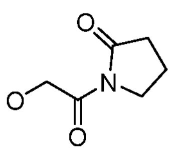 , 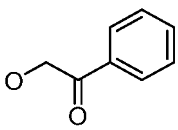 ,

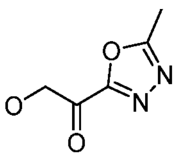 , 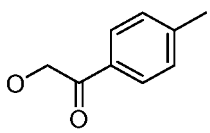 and 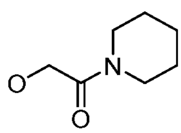 ;

B is selected from the group consisting of H, OH, OMe, SH, SMe, COOH, NH2, Me, Et, i-Pr, Pr, t-Bu, Bu, i-Bu,

F, Cl, Br, CN, CF3 and NO2;

C is selected from the group consisting of H, OH, OMe, SH, SMe, COOH, NH2, Me, Et, i-Pr, Pr, t-Bu, Bu, i-Bu, F, Cl, Br, CN, CF3 and NO2;

D is selected from the group consisting of H, OH, OMe, SH, SMe, COOH, NH2, Me, Et, i-Pr, Pr, t-Bu, Bu, i-Bu, F, Cl, Br, CN, CF3 and NO2;

E is selected from the group consisting of H, OH, OMe, SH, SMe, COOH, NH2, Me, Et, i-Pr, Pr, t-Bu, Bu, i-Bu, F, Cl, Br, CN, CF3 and NO2;

F is selected from the group consisting of H, OH, OMe, SH, SMe, COOH, NH2, Me, Et, i-Pr, Pr, t-Bu, Bu, i-Bu, F, Cl, Br, CN, CF3 and NO2; and

G is selected from the group consisting of H, OH, OMe, SH, SMe, COOH, NH2, Me, Et, i-Pr, Pr, t-Bu, Bu, i-Bu, F, Cl, Br, CN, CF3 and NO2;

and wherein substituents F and G can form together an additional five-membered ring, where F and G are nitrogen atoms.

10. Use according to item 9, wherein the compound is selected from the group consisting of

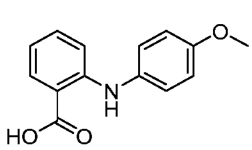 , 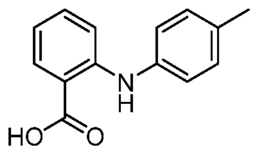 , 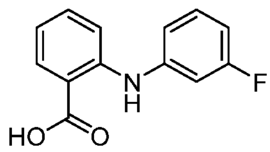

and

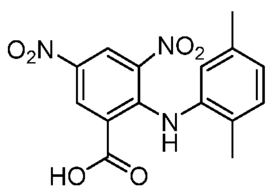 .

11. Use according to item 9, wherein the compound is selected from the group consisting of

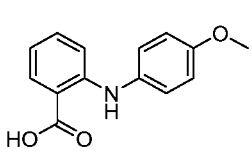 , 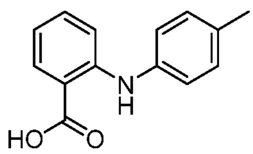 , 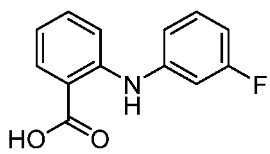

and

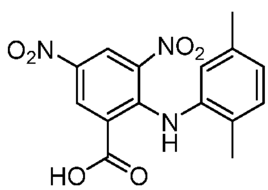 .

12. Use according to item 9, wherein the compound is

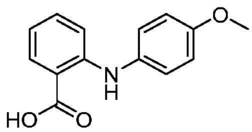

.

13. Use according to item 9, wherein the compound is

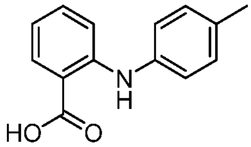

.

14. Use according to item 9, wherein the compound is

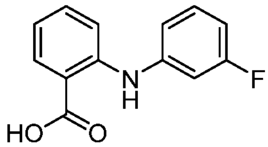

.

15. Use according to item 9, wherein the compound is

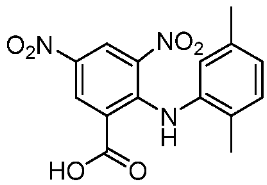

.

16. The use according to any one of items 8 to 15, wherein the plant pathogen is selected from the group consisting of *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f. teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies* and *Streptomyces scabiei.*

17. The use according to any one of items 8 to 15, wherein the plant pathogen is *Phytophthora infestans.*

18. The use according to any one of items 8 to 15, wherein the plant disease is selected from the group consisting of root rot, downy mildew, take-all plant disease, tulip fire, chocolate spot disease, *Galanthius nivalis,* anthracnose, blue stain, blackleg disease, net blotch including spot form (SFNB) and net form (NFNB), tan spot, soft rot, blight including early blight and late blight, fire blight, scab and common scab.

19. The use according to any one of items 8 to 15, wherein the compound is used for the prevention of potato blight caused by the pathogen *Phytophthora infestans.*

20. A method for protecting a plant against a plant disease caused by a plant pathogen that expresses an NLP protein, comprising the step of: applying a compound as defined in any one of items 1 to 7 to a plant in need thereof.

21. A method for controlling the growth of a plant pathogen expressing an NLP protein, comprising the step of: applying a compound as defined in any one of items 1 to 7 to a plant in need thereof.

22. The method according to item 20 or 21, wherein the plant pathogen is selected from the group consisting of *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosman-*

*nia clavigera, Leptosphaeria maculans, Phaeosphaeria nodorum, Pyrenophora teres f. teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies* and *Streptomyces scabiei.*

23. The method according to item 20 or 21, wherein the plant pathogen is *Phytophthora infestans.*

24. The method according to any one of items 20 to 23, wherein the plant disease is selected from the group consisting of root rot, downy mildew, take-all plant disease, tulip fire, chocolate spot disease, *Galanthius nivalis,* anthracnose, blue stain, blackleg disease, net blotch including spot form (SFNB) and net form (NFNB), tan spot, soft rot, blight including early blight and late blight, fire blight, scab and common scab.

## FIGURE LEGENDS

**Figure 1:** Compound I (2-(6-methyl-4-oxochromen-3-yl)-1,3-thiazolidin-3-ium-4-carboxylate).

**Figure 2:** The general formula of compounds IIa-IId.

**Figure 3:** The control experiment of infiltrating tobacco leaves by increasing concentrations of the proteins $NLP_{Pp}$ (A) and $NLP_{Pya}$ (B). Concentrations (from left to right) were 62.5, 125, 250, 500 and 1000 nM. The upper epidermis of the leaf was photographed 6 days after infiltration.

**Figure 4:** The control experiment of infiltrating tobacco leaves by ultrapure water, 5 % DMSO and 1 mM compounds I in IIa. The injected solutions did not cause necrosis of tobacco leaves. The upper part of the leaf was photographed.

**Figure 5:** Example of inhibitory activity of necrosis by compounds I and IIa. The necrotic activity of $NLP_{Pya}$ was assessed in the presence of compounds I and IIa at a final concentration of 1 mM. Concentration of $NLP_{Pya}$ was 250 nM. The panels 0 h show the extent of infiltration immediately after infiltration.

**Figure 6:** Inhibitory effects of compounds I and IIa on the growth of the pathogen *Phytophthora infestans* on leaves of potato (*Solanum tuberosum*). (A) Growth of the pathogen *P. infestans* on potato leaves. Each potato leaf was inoculated in duplicate with 1 mM of a control compound (left half of the leaf) and 1 mM of the test compound (right half of the leaf). A compound that does not inhibit necrotic activity of NLPs in the infiltration assay was chosen as a control compound. (B) Quantification of the *P. infestans* growth on potato leaves 4 days after infection by PCR in real time. The leaves were infected with drop inoculation with 10 $\mu$L of zoospore solution with a concentration of 5 $\times$ $10^4$ $mL^{-1}$ zoospores. The solution contained 1 mM concentration of inhibitor or control compound. Stars indicate statistically significant differences between the test and the control compound (*** P <0.001; Student's t-test).

**Figure 7:** Sensorgrams of the interaction of the compound IIa (A, B) and I (C) with the protein $NLP_{Pya}$. Compound IIa was injected at concentrations of 0, 3.1, 6.3, 12.5, 25, 50, 100 and 200 $\mu$M (25 $\mu$M concentration was repeated twice) and compound I at concentrations of 0, 4.9, 9.8, 19.5, 39.1, 78.1, 156.3, 312.5 in 625 $\mu$M. Equilibrium constant $K_D$ for the interaction of compound IIa with $NLP_{Pya}$ was determined by fitting the experimental data with the steady state affinity model of the binding (B).

## DETAILED DESCRIPTION OF THE INVENTION

The invention is based on the use of a compound of formula I (Figure 1) and the compounds of the general formula II (Figure 2). These compounds serve as inhibitors of NLPs (Nep1-like proteins), and thus are used for the control of plant pathogens, e.g. for controlling oomycetes of the genus Phytophthora causing potato or tomato blight.

The present invention provides the use of a compound of formula (I) as inhibitor of NLP proteins

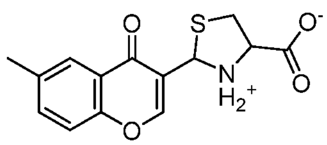

(I) .

The present invention further provides the use of a compound of formula (I) for the prevention of a plant disease which is caused by a plant pathogen that expresses an NLP protein

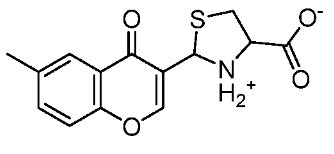

(I)

.

The present invention further provides the use of a compound of general formula (II) as inhibitor of NLP proteins

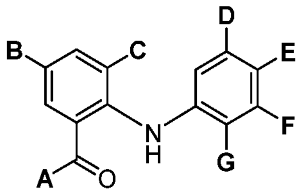

(II)

,

wherein:

A is selected from the group consisting of OH,

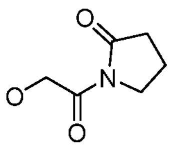 , 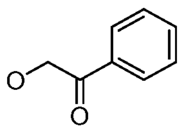 ,

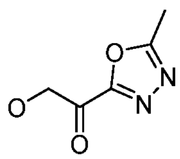 , 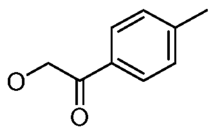

and

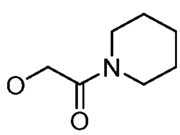 ;

B is selected from the group consisting of H, OH, OMe, SH, SMe, COOH, NH2, Me, Et, i-Pr, Pr, t-Bu, Bu, i-Bu, F, Cl, Br, CN, CF3 and NO2;

C is selected from the group consisting of H, OH, OMe, SH, SMe, COOH, NH2, Me, Et, i-Pr, Pr, t-Bu, Bu, i-Bu, F, Cl, Br, CN, CF3 and NO2;

D is selected from the group consisting of H, OH, OMe, SH, SMe, COOH, NH2, Me, Et, i-Pr, Pr, t-Bu, Bu, i-Bu, F, Cl, Br, CN, CF3 and NO2;

E is selected from the group consisting of H, OH, OMe, SH, SMe, COOH, NH2, Me, Et, i-Pr, Pr, t-Bu, Bu, i-Bu, F, Cl, Br, CN, CF3 and NO2;

F is selected from the group consisting of H, OH, OMe, SH, SMe, COOH, NH2, Me, Et, i-Pr, Pr, t-Bu, Bu, i-Bu, F, Cl, Br, CN, CF3 and NO2; and

G is selected from the group consisting of H, OH, OMe, SH, SMe, COOH, NH2, Me, Et, i-Pr, Pr, t-Bu, Bu, i-Bu, F, Cl, Br, CN, CF3 and NO2;

and wherein substituents F and G can form together an additional five-membered ring, where F and G are nitrogen atoms.

The present invention further provides the use of a compound of general formula (II) for the prevention of a plant disease which is caused by a plant pathogen that expresses an NLP protein

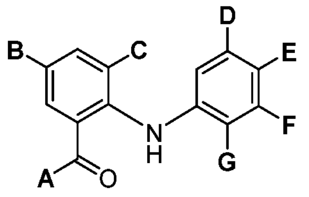

(**II**)

,

wherein:

A is selected from the group consisting of OH,

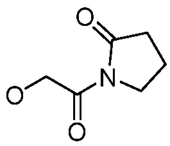
,
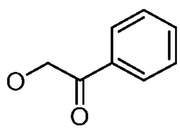
,

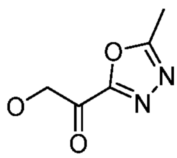
,
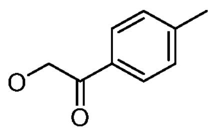

and

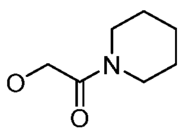
;

B is selected from the group consisting of H, OH, OMe, SH, SMe, COOH, NH2, Me, Et, i-Pr, Pr, t-Bu, Bu, i-Bu, F, Cl, Br, CN, CF3 and NO2;

C is selected from the group consisting of H, OH, OMe, SH, SMe, COOH, NH2, Me, Et, i-Pr, Pr, t-Bu, Bu, i-Bu, F, Cl, Br, CN, CF3 and NO2;

D is selected from the group consisting of H, OH, OMe, SH, SMe, COOH, NH2, Me, Et, i-Pr, Pr, t-Bu, Bu, i-Bu, F, Cl, Br, CN, CF3 and NO2;

E is selected from the group consisting of H, OH, OMe, SH, SMe, COOH, NH2, Me, Et, i-Pr, Pr, t-Bu, Bu, i-Bu, F, Cl, Br, CN, CF3 and NO2;

F is selected from the group consisting of H, OH, OMe, SH, SMe, COOH, NH2, Me, Et, i-Pr, Pr, t-Bu, Bu, i-Bu, F, Cl, Br, CN, CF3 and NO2; and

G is selected from the group consisting of H, OH, OMe, SH, SMe, COOH, NH2, Me, Et, i-Pr, Pr, t-Bu, Bu, i-Bu, F, Cl, Br, CN, CF3 and NO2;

and wherein substituents F and G can form together an additional five-membered ring, where F and G are nitrogen atoms.

The compounds of general formula (II) used according to the invention may be more specifically described by the following embodiments.

According to certain embodiments, A is OH. According to certain embodiments, A is

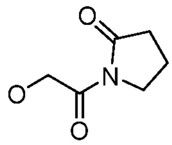
.

According to certain embodiments, A is

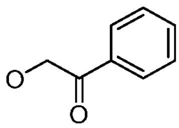
.

According to certain embodiments, A is

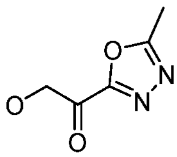
.

According to certain embodiments, A is

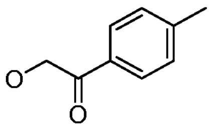
.

According to certain embodiments, A is

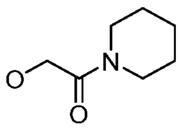
.

According to certain embodiments, B is H. According to certain embodiments, B is OH. According to certain embodiments, B is OMe. According to certain embodiments, B is SH. According to certain embodiments, B is SMe. According to certain embodiments, B is COOH. According to certain embodiments, B is NH2. According to certain embodiments, B is Me. According to certain embodiments, B is Et. According to certain embodiments, B is i-Pr. According to certain embodiments, B is Pr. According to certain embodiments, B is t-Bu. According to certain embodiments, B is Bu. According to certain embodiments, B is i-Bu. According to certain embodiments, B is F. According to certain embodiments, B is Cl. According to certain embodiments, B is Br. According to certain embodiments, B is CN. According to certain embodiments, B is CF3. According to certain embodiments, B is N02.

According to certain embodiments, C is H. According to certain embodiments, C is OH. According to certain embodiments, C is OMe. According to certain embodiments, C is SH. According to certain embodiments, C is SMe. According to certain embodiments, C is COOH. According to certain embodiments, C is NH2. According to certain embodiments, C is Me. According to certain embodiments, C is Et. According to certain embodiments, C is i-Pr. According to certain embodiments, C is Pr. According to certain embodiments, C is t-Bu. According to certain embodiments, C is Bu. According to certain embodiments, C is i-Bu. According to certain embodiments, C is F. According to certain embodiments, C is Cl. According to certain embodiments, C is Br. According to certain embodiments, C is CN. According to certain embodiments, C is CF3. According to certain embodiments, C is N02.

According to certain embodiments, D is H. According to certain embodiments, D is OH. According to certain embodiments, D is OMe. According to certain embodiments, D is SH. According to certain embodiments, D is SMe. According to certain embodiments, D is COOH. According to certain embodiments, D is NH2. According to certain embodiments, D is Me. According to certain embodiments, D is Et. According to certain embodiments, D is i-Pr. According to certain embodiments, D is Pr. According to certain embodiments, D is t-Bu. According to certain embodiments, D is Bu. According to certain embodiments, D is i-Bu. According to certain embodiments, D is F. According to certain embodiments, D is Cl. According to certain embodiments, D is Br. According to certain embodiments, D is CN. According to certain embodiments, D is CF3. According to certain embodiments, D is N02.

According to certain embodiments, E is H. According to certain embodiments, E is OH. According to certain embodiments, E is OMe. According to certain embodiments, E is SH. According to certain embodiments, E is SMe. According to certain embodiments, E is COOH. According to certain embodiments, E is NH2. According to certain embodiments, E is Me. According to certain embodiments, E is Et. According to certain embodiments, E is i-Pr. According to certain embodiments, E is Pr. According to certain embodiments, E is t-Bu. According to certain embodiments, E is Bu. According to certain embodiments, E is i-Bu. According to certain embodiments, E is F. According to certain embodiments, E is Cl. According to certain embodiments, E is Br. According to certain embodiments, E is CN. According to certain embodiments, E is CF3. According to certain embodiments, E is N02.

According to certain embodiments, F is H. According to certain embodiments, F is OH. According to certain embodiments, F is OMe. According to certain embodiments, F is SH. According to certain embodiments, F is SMe. According to certain embodiments, F is COOH. According to certain embodiments, F is NH2. According to certain embodiments, F is Me. According to certain embodiments, F is Et. According to certain embodiments, F is i-Pr. According to certain embodiments, F is Pr. According to certain embodiments, F is t-Bu. According to certain embodiments, F is Bu. According to certain embodiments, F is i-Bu. According to certain embodiments, F is F. According to certain embodiments, F is Cl. According to certain embodiments, F is Br. According to certain embodiments, F is CN. According to certain embodiments, F is CF3. According to certain embodiments, F is N02.

According to certain embodiments, G is H. According to certain embodiments, G is OH. According to certain embodiments, G is OMe. According to certain embodiments, G is SH. According to certain embodiments, G is SMe. According to certain embodiments, G is COOH. According to certain embodiments, G is NH2. According to certain embodiments, G is Me. According to certain embodiments, G is Et. According to certain embodiments, G is i-Pr. According to certain embodiments, G is Pr. According to certain embodiments, G is t-Bu. According to certain embodiments, G is Bu. According to certain embodiments, G is i-Bu. According to certain embodiments, G is F. According to certain embodiments, G is Cl. According to certain embodiments, G is Br. According to certain embodiments, G is CN. According to certain embodiments, G is CF3. According to certain embodiments, G is N02.

According to certain embodiments, substituents F and G form together an additional five-membered ring, where F and G are nitrogen atoms.

According to certain embodiments, the compound is selected from the group consisting of

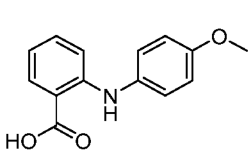
,
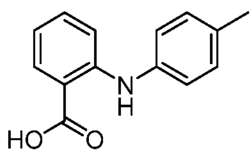
,
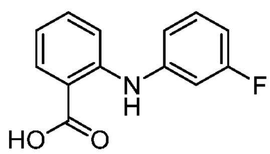

and

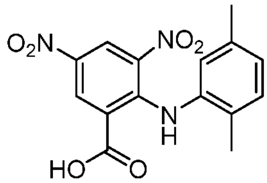

.

According to certain embodiments, the compound of general formula (II) is

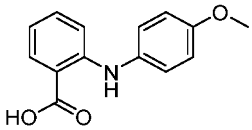

.

According to certain embodiments the compound of general formula (II) is

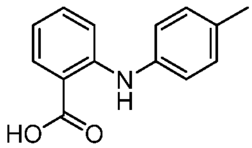

.

According to certain embodiments the compound of general formula (II) is

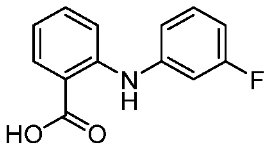

.

According to certain embodiments, the compound of general formula (II) is

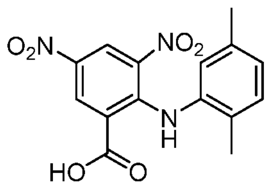

.

Some of the compounds of this invention have a stereogenic center, which is in the absolute configuration of R or S, and may exist in the form of racemates, pure enantiomers or conglomerates.

The invention also includes phytopharmaceutically acceptable salts of compounds of formula I and phytopharmaceutically acceptable salts of compounds of general formula II.

The compound of formula (I) or general formula (II) as defined above is used on any plant in need of being protected against a plant disease which is caused by a plant pathogen that produces an NLP protein. The plant may be an angiosperm or gymnosperm. According to certain embodiments, the plant is an angiosperm. According to certain embodiment, the plant is a gymnosperm.

The plant may be a dicot or monocot. According to certain embodiments, the plant is a dicot. According to certain embodiment, the plant is a monocot.

The plant may be a food plant (i.e. a plant some parts of which provides food for animal or human consumption), such as fruit plant.

The plant may be a crop plant, such as a food crop plant. According to certain embodiments, the plant is a food crop plant selected from the group consisting of pepper plant, cocoa plant, tomato plant, potato plant, maize plant, wheat plant and rice plant. According to certain embodiments, the plant is a potato plant, such as *Solanum tuberosum.* According to certain embodiments, the plant is a maize plant, According to certain embodiments, the plant is wheat plant, According

to certain embodiments, the plant is a rice plant.

The plant may be a tobacco plant, such as *Nicotiana tabacum.*

The compound of formula (I) or general formula (II) as defined above is used for the prevention of a plant disease which is caused by a plant pathogen that expresses an NLP protein. The plant pathogen may be an oomycete, a fungi or a bacterium. According to certain embodiments, the plant pathogen is an oomycete. According to certain embodiments, the plant pathogen is a fungi. According to certain embodiments, the plant pathogen is a bacterium.

The plant pathogen may be a plant pathogen selected from the group consisting of *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f. teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies* and *Streptomyces scabiei.*

According to certain embodiments, the plant pathogen is of the genus *Phytophthora.* According to certain embodiments, the plant pathogen is *Phytophthora infestans.* According to certain embodiments, the plant pathogen is *Phytophthora cinnamomi.*

According to certain embodiments, the plant pathogen is of the genus *Plasmopara.* According to certain embodiments, the plant pathogen is *Plasmopara viticola.*

According to certain embodiments, the plant pathogen is of the genus *Gaeumannomyces.* According to certain embodiments, the plant pathogen is *Gaeumannomyces graminis var. tritici.*

According to certain embodiments, the plant pathogen is of the genus *Botrytis.* According to certain embodiments, the plant pathogen is *Botrytis tulipae.* According to certain embodiments, the plant pathogen is *Botrytis fabae.* According to certain embodiments, the plant pathogen is *Botrytis galanthina.*

According to certain embodiments, the plant pathogen is of the genus *Colletotrichum.* According to certain embodiments, the plant pathogen is *Colletotrichum graminicola.* According to certain embodiments, the plant pathogen is *Colletotrichum higginsianum.*

According to certain embodiments, the plant pathogen is of the genus *Grosmannia.* According to certain embodiments, the plant pathogen is *Grosmannia clavigera.*

According to certain embodiments, the plant pathogen is of the genus *Leptosphaeria.* According to certain embodiments, the plant pathogen is *Leptosphaeria maculans.*

According to certain embodiments, the plant pathogen is of the genus *Phaeosphaeria.* According to certain embodiments, the plant pathogen is *Phaeosphaeria nodorum.*

According to certain embodiments, the plant pathogen is of the genus *Pyrenophora.* According to certain embodiments, the plant pathogen is *Pyrenophora teres f. teres.* According to certain embodiments, the plant pathogen is *Pyrenophora tritici-repentis.*

According to certain embodiments, the plant pathogen is of the genus *Verticillium.* According to certain embodiments, the plant pathogen is *Verticillium albo-atrum,*

According to certain embodiments, the plant pathogen is of the genus *Dickeya.* According to certain embodiments, the plant pathogen is *Dickeya dadantii.* According to certain embodiments, the plant pathogen is *Dickeya zeae.*

According to certain embodiments, the plant pathogen is of the genus *Erwinia.* According to certain embodiments, the plant pathogen is *Erwinia amylovora.* According to certain embodiments, the plant pathogen is *Erwinia billingia.*

According to certain embodiments, the plant pathogen is of the genus *Pectobacterium.* According to certain embodiments, the plant pathogen is *Pectobacterium cypripedii.*

According to certain embodiments, the plant pathogen is of the genus *Streptomyces.* According to certain embodiments, the plant pathogen is *Streptomyces acidoscabies.* According to certain embodiments, the plant pathogen is *Streptomyces scabiei.*

The compound of formula (I) or general formula (II) as defined above is used for the prevention of a plant disease selected from the group consisting of root rot, downy mildew, take-all plant disease, tulip fire, chocolate spot disease, *Galanthius nivalis,* anthracnose, blue stain, blackleg disease, net blotch including spot form (SFNB) and net form (NFNB), tan spot, soft rot, blight including early blight and late blight, fire blight, scab and common scab.

According to certain embodiments, the plant disease is root rot, such as root rot in avocado. According to certain embodiments, the plant disease is downy mildew, such as downy mildew on grapevine. According to certain embodiments, the plant disease is take-all plant disease, such as take-all plant disease in wheat or barley. According to certain embodiments, the plant disease is tulip fire. According to certain embodiments, the plant disease is chocolate spot disease, such as is chocolate spot disease in bean. According to certain embodiments, the plant disease is *Galanthius nivalis.* According to certain embodiments, the plant disease is anthracnose, such as anthracnose in cereals, such as maize or wheat. According to certain embodiments, the plant disease is blue stain, such as blue stain on pine. According to certain embodiments, the plant disease is blackleg disease, such as blackleg disease on brassicaceae. According to certain embodiments, the plant disease is net blotch. According to certain embodiments, the plant disease is the spot form of

net blotch (SFNB). According to certain embodiments, the plant disease is net form of net blotch (NFNB), such as NFNB on barley. According to certain embodiments, the plant disease is tan spot, such as tan spoon on wheat. According to certain embodiments, the plant disease is soft rot, such as soft rot in *Solanaceae* or *Brassicaceae.* According to certain embodiments, the plant disease is soft rot in rice. According to certain embodiments, the plant disease is blight. According to certain embodiments, the plant disease is early blight. According to certain embodiments, the plant disease is late blight. According to certain embodiments, the plant disease is fire blight, such as fire blight on *Rosaceae.* According to certain embodiments, the plant disease is scab, such as scab in potato. According to certain embodiments, the plant disease is common scab, such as common scab in potato.

According to certain embodiments, the plant disease is potato blight caused by the pathogen *Phytophthora infestans.*

The present invention further provides a method for protecting a plant against a plant disease caused by a plant pathogen that expresses an NLP protein, comprising the step of: applying a compound of formula (I) or general formula (II) as defined herein to a plant in need thereof.

The present invention further provides a method for controlling the growth of a plant pathogen expressing an NLP protein, comprising the step of: applying a compound of formula (I) or general formula (II) as defined herein to a plant in need thereof.

It is understood that all details provided herein with respect to the compound of formula (I) or general formula (II), plants in need, plant diseases and plant pathogens, including all embodiments, apply, mutatis mutandis, to the methods of the present invention.

Generally, the compound of formula (I) or general formula (II) can be applied to a plant in need thereof in any suitable dose, frequency and method of administration.

The compound may be in liquid form, and may be applied by spraying or dropping onto the plant. According to certain embodiments, the compound of formula (I) or general formula (II) is applied by spraying. According to certain embodiments, the compound of formula (I) or general formula (II) is applied by dropping.

The compound may be applied at a concentration ranging from about 0.1 μM to about 100 mM, such as from about 0.1 μM to about 10 mM, about 0.5 μM to about 10 mM, about 1 μM to about 10 mM, about 10 μM to about 10 mM, about 50 μM to about 10 mM, about 100 μM to about 10 mM, about 500 μM to about 10 mM, about 0.1 μM to about 5 mM, about 0.5 μM to about 5 mM, about 1 μM to about 5 mM, about 10 μM to about 5 mM, about 50 μM to about 5 mM, about 100 μM to about 5 mM, about 500 μM to about 5 mM, about 0.1 μM to about 1 mM, about 0.5 μM to about 1 mM, about 1 μM to about 1 mM, about 10 μM to about 1 mM, about 50 μM to about 1 mM, about 100 μM to about 1 mM, or about 500 μM to about 1 mM.

The compound may be applied at least once a week. For example, it may be applied 1 to 3 times a week, such as two times a week. The compound may be applied at least once a day. For example, it may be applied 1 to 3 times a day, such as twice a day.

## EXAMPLES

### Biological assays

I. Infiltration of NLPs into tobacco leaves

1. Principle

This biological test may be used to assess the impact of compounds on the functionality of NLPs. The NLP protein solution is injected in the absence or presence of the compounds into tobacco leaves of healthy plants. The plants are then observed for 1-3 days and checked for the presence of necrosis.

2. Reagents

NLP proteins: $NLP_{Pya}$ from the oomycete, *Pythium aphanidermatum,* was prepared in recombinant form by the use of heterologous expression system for protein production in *Escherichia coli.* $NLP_{Pp}$ from oomycete *Phytophthora parasitica* was prepared in yeast *Pichia pastoris.* Proteins were purified with chromatographic procedures and stored in water solutions at -20 °C.

Compounds: Compounds were prepared as stock solutions with a concentration of 10 mM in DMSO. Appropriate working solutions were prepared by appropriate dilution of the stock solution. The concentration of DMSO in the test solution was 5 %. We have used the compounds shown in Table 1.

**Table 1:** Used compounds.

| **Compound** | **ID of the compound and the company that sells the compound** | **Chemical names of compounds** | **Structure** |
|---|---|---|---|
| I | ZINC00032534 ChemBridge | 2-(6-methyl-4-oxochromen-3-yl)-1,3-thiazolidin-3-ium-4-carboxylate | 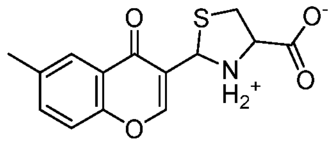 |
| IIa | ZINC00241322 ChemBridge | 2-[(4-methoxyphenyl)amino] benzoic acid | 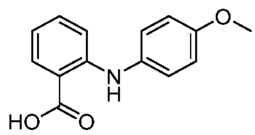 |
| IIb | Z168827496 Enamine | 2-[(4-methylphenyl)amino] benzoic acid | 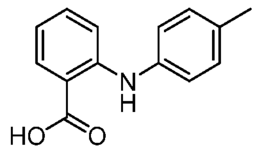 |
| IIc | ST085771 TimTec | N-(3-Fluorophenyl)anthranilic acid | 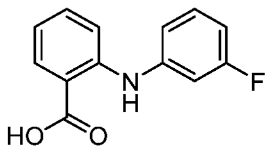 |
| IId | 5222662 ChemBridge | 2-[(2,5-dimethylphenyl) amino]-3,5-dinitrobenzoic acid | 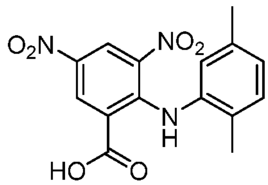 |

Tobacco plants: Tobacco plants (*Nicotiana tabacum* White Burley) were cultured in chambers for growing plants under controlled conditions of light, humidity and temperature up to the age of 5-7 weeks.

3. Procedure

Protein solution, compound and appropriate volume of ultrapure water were mixed in Eppendorf tubes. The mixture was mixed well and injected in the lower epidermis of tobacco leaves. We have injected 50 μL of solution. The area of injected solution was labelled on tobacco leaves. We used ultrapure water, 5 % DMSO, protein solutions of NLPs at different concentrations and appropriate dilutions of compounds as control solutions. The area on the lower side of the leaf, which was infiltrated with solutions, was photographed immediately after injection, and then after 24, 48 and 72 hours. On the third day the plant leaf was photographed also from the top side.

II. Growth of pathogenic microorganisms on potato leaves

1. Principle

To check the effects of inhibitors on the growth of plant pathogens *in vivo*, we used potato leaves which were infected with the pathogen (oomycete *Phytophthora infestans*). After several days of incubation, leaves were visually evaluated and compared to growth of the pathogen in the presence of the control compound, which did not inhibit NLP protein and in the presence of compounds which have shown an inhibitory effect. The presence of the pathogens was evaluated by the method of real-time PCR, which quantitatively evaluates the amount of pathogen DNA on the potato leaf.

2. Reagents

We have used potato leaves (*Solanum tuberosum* var. Desirée) and zoospores of *Phytophthora infestans* (strain 88069). Oligonucleotides that were used for the real-time PCR were Pi08-3-3-fwd (5'-CAATTCGCCACCTTCTTCGA-3') and Pi08-3-3-rev (5'-GCCTTCCTGCCCTCAAGAAC-3').

3. Procedure

Potato leaves (*Solanum tuberosum*) were removed from the plants and infected with 10 μL-drops, which contained 5 × $10^4$ $mL^{-1}$ zoospores of the pathogen *Phytophthora infestans* (strain 88069). Drops also contained 1 mM solutions of control compound or compounds I or IIa. The infected leaves were incubated for 4 days in humid atmosphere at 18 °C. Leaves were photographed after 4 days. The infected areas of the leaves were removed (discs of 12 mm in diameter) and used for DNA extraction by the established procedure (Llorente et al., 2010, Lett Appl Microbiol, 1(6):603-10). Quantification of DNA was performed with real-time PCR (iQ5 iCycler, Bio-Rad). We have used 1 μL of DNA in 20 μL of buffer that contained SYBR green dye (Thermo Scientific). Oligonucleotides for amplification were chosen on the basis of repetitive sequences in the genome of *P. infestans* (Haas et al., 2009, Nature, 461(7262):393-8). The amount of DNA was determined on the basis of calibration curve in the range 0,001 ng to 100 ng of DNA obtained from the mycelium of *P. infestans* (spectrophotometric determination of DNA concentration, NanoDrop 2000, Thermo Scientific). The following conditions were used for amplification: 10 min at 95 °C, 40 cycles of 10 s at 95 °C, 15 s at 59 °C, 20 s at 72 °C. Averages of three technical repeats were determined.

**Biophysical tests**

III. Interactions of compounds with NLP proteins as determined by surface plasmon resonance

1. Principle

We have used surface plasmon resonance for determining interactions of compounds with NLP proteins. This is an established method for studying molecular interactions. We have immobilized NLP proteins on the surface of the sensor chip. Solutions of appropriate concentrations of compounds I, IIa, IIb, IIc and IId were injected across the surface of the sensor chip. The increase in the signal was monitored upon interaction of compounds with NLP proteins. The use of different concentrations of compounds enabled determination of equilibrium binding constant, $K_D$, by the use of the following equation:

$$R_{eq} = C*R_{max}/(K_D+C)$$

where $R_{eq}$, C and Rmax represent equilibrium response, concentrations of compounds and maximum response, respectively.

2. Reagents

Proteins and substances were prepared as described in infiltration assays. Experiments were performed by employing Biacore T100 apparatus (GE Healthcare) and CM5 sensor chips. For immobilisation of proteins we used 20 mM Hepes, 140 mM NaCl, pH 7,4 as the running buffer. For binding assays we have used 50 mM MES, 140 mM NaCl, 5 % DMSO, pH 5,8 as the running buffer. Experiments were performed at 25 °C.

3. Procedure

NLP proteins were covalently bound to the sensor chip via amino groups. The surface was activated by 10-min injection of the mixture 1-ethyl-3-(3-dimethylaminopropyl)carbodiimide hydrochloride / N-hydroxysuccinimide (1/1). NLP proteins were immobilised on the second flow cell. The first flow cell was used as a control of compounds binding to the dextran matrix. Both cells were blocked with 7-min injection of ethanolamine. After extensive wash of the sensor chip with the running buffer, we have injected appropriate solutions of compounds. Compounds of series II were injected at the following concentrations: 0, 3.125, 6.25, 12.5, 25, 50, 100 and 200 μM. The solution that contained 25 μM concentration of compounds was always injected as a control at the end of the experiment. Compound I was injected at the following concentrations: 0, 4.88, 9.765, 19.53, 39.06, 78.125, 156.25, 312.5 and 625 μM. Regeneration between the injections was not needed. The obtained sensorgrams were analysed by the use of Biacore T100 Evaluation Software

and binding model Steady State Affinity, which allowed obtaining equilibrium dissociation constants for the binding of compounds to NLP proteins.

## Results of testings

### I. Infiltration of NLP proteins in tobacco leaves

The chosen NLP proteins, $NLP_{Pp}$ and $NLP_{Pya}$, cause extensive necrosis of tobacco leave tissue upon infiltrations (Figure 3). These are clearly visible at 250 nM NLP protein concentration. The control experiments with ultrapure water, DMSO (5 %), which was used for the solubilisation of compounds, did not cause necrosis (Figure 4). Necrosis was not caused also by solutions of compounds I and IIa at the final 1 mM concentration (Figure 4). Necrosis was not visible after infiltration of NLP proteins in the presence of inhibitory substances (compounds I and IIa at the final 1 mM concentrations), which clearly indicates that the used compounds have inhibitory potential (Figure 5).

### II. Growth of pathogenic microorganisms on potato leaves

We have assessed the growth of the pathogen *P. infestans* on potato leaves by the use of an biological assay (Figure 6). We have used visual analysis and found that a control substance did not inhibit necrotic activity of NLPs, while both compounds that were used (I and IIa) were able to inhibit growth of the pathogen (Figure 6A). We have determined the presence of pathogen DNA by the use of real-time PCR and proved statistically significant amounts of pathogen DNA in control samples in comparison to samples in the presence of compounds I and IIa (Figure 6B).

### III. Interactions of compounds with NLP proteins as determined by surface plasmon resonance

We have monitored interaction of compounds with NLP proteins by using surface plasmon resonance. We have found that substances bound to NLP proteins in the micro molar concentration range (Figure 7). We have determined equilibrium dissociation constants from the sensorgrams (Table 2). These results clearly show the direct interaction of compounds with used NLP proteins.

**Table 2:** Inhibitory activity of compounds.

| **Compound** | **Chemical names of compounds** | **Structure** | **$K_D$ (μM) $NLP_{Pya}$** | **$K_D$ (μM) $NLP_{PP}$** |
|---|---|---|---|---|
| I | 2-(6-methyl-4-oxochromen-3-yl)-1,3-thiazolidin-3-ium-4-carboxylate | 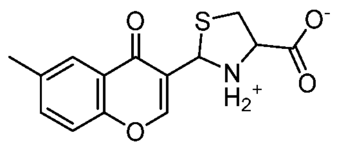 | n.d. [1] | n.d. [1] |
| IIa | 2-[(4-methoxyphenyl)amino] benzoic acid | 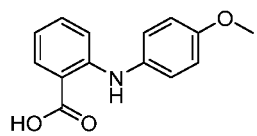 | 130,9 ± 36,4 (n=6) | 71,9 ± 19,1 (n=2) |
| IIb | 2-[(4-methylphenyl)amino]benzoic acid | 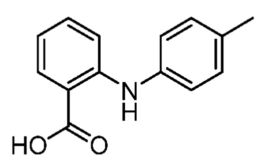 | 98,0 ± 43,3 (n=4) | 83,2 ± 6,9 (n=4) |
| IIc | N-(3-Fluorophenyl)anthranilic acid | 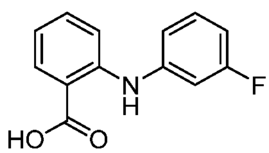 | 77,3 | 62,4 |

(continued)

| Compound | Chemical names of compounds | Structure | $K_D$ (μM) $NLP_{Pya}$ | $K_D$ (μM) $NLP_{PP}$ |
|---|---|---|---|---|
| IId | 2-[(2,5-dimethylphenyl)amino]-3,5-dinitrobenzoic acid | 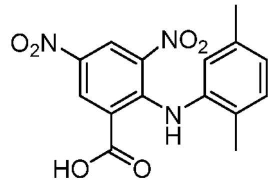 | n.d. | 39,7 |
| n.d., not determined; n=number of titrations<br>[1] compound I binds to the surface of NLP proteins with complex kinetics and the ratio of bound compound / protein > 1 (see Figure 7). | | | | |

## Claims

1. Use of a compound of formula (I) as inhibitor of NLP proteins

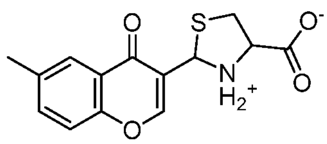

(I)

.

2. Use of a compound of general formula (II) as inhibitor of NLP proteins

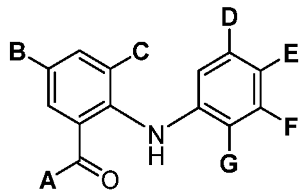

(II)

,

wherein:

A is selected from the group consisting of OH,

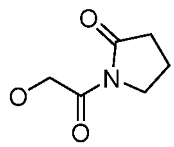

,

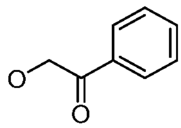

,

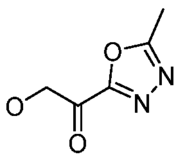

,

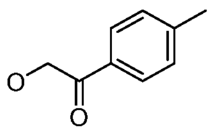

and

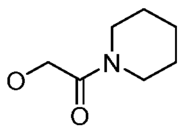

;

B is selected from the group consisting of H, OH, OMe, SH, SMe, COOH, NH2, Me, Et, i-Pr, Pr, t-Bu, Bu, i-Bu, F, Cl, Br, CN, CF3 and NO2;
C is selected from the group consisting of H, OH, OMe, SH, SMe, COOH, NH2, Me, Et, i-Pr, Pr, t-Bu, Bu, i-Bu, F, Cl, Br, CN, CF3 and NO2;
D is selected from the group consisting of H, OH, OMe, SH, SMe, COOH, NH2, Me, Et, i-Pr, Pr, t-Bu, Bu, i-Bu, F, Cl, Br, CN, CF3 and NO2;
E is selected from the group consisting of H, OH, OMe, SH, SMe, COOH, NH2, Me, Et, i-Pr, Pr, t-Bu, Bu, i-Bu, F, Cl, Br, CN, CF3 and NO2;
F is selected from the group consisting of H, OH, OMe, SH, SMe, COOH, NH2, Me, Et, i-Pr, Pr, t-Bu, Bu, i-Bu, F, Cl, Br, CN, CF3 and NO2; and
G is selected from the group consisting of H, OH, OMe, SH, SMe, COOH, NH2, Me, Et, i-Pr, Pr, t-Bu, Bu, i-Bu, F, Cl, Br, CN, CF3 and NO2;
and wherein substituents F and G can form together an additional five-membered ring, where F and G are

nitrogen atoms.

**3.** Use according to claim 2, wherein the compound is selected from the group consisting of

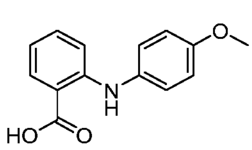
,
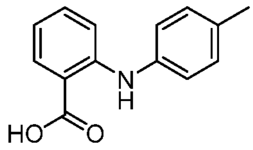
,
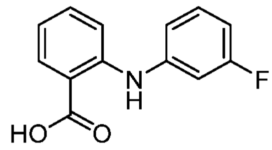

and

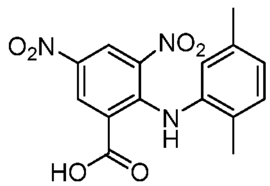
.

**4.** Use of a compound of formula (I) for the prevention of a plant disease which is caused by a plant pathogen that expresses an NLP protein

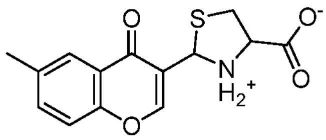

(**I**)
.

**5.** Use of a compound of general formula (II) for the prevention of a plant disease which is caused by a plant pathogen that expresses an NLP protein

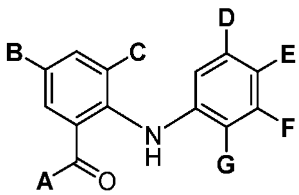

(**II**)
,

wherein:

A is selected from the group consisting of OH,

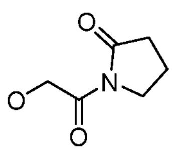
,
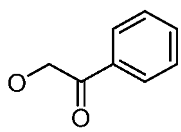
,

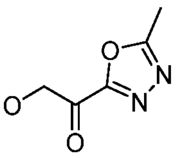, 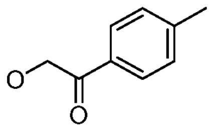

and

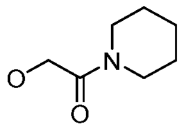;

B is selected from the group consisting of H, OH, OMe, SH, SMe, COOH, NH2, Me, Et, i-Pr, Pr, t-Bu, Bu, i-Bu, F, Cl, Br, CN, CF3 and NO2;
C is selected from the group consisting of H, OH, OMe, SH, SMe, COOH, NH2, Me, Et, i-Pr, Pr, t-Bu, Bu, i-Bu, F, Cl, Br, CN, CF3 and NO2;
D is selected from the group consisting of H, OH, OMe, SH, SMe, COOH, NH2, Me, Et, i-Pr, Pr, t-Bu, Bu, i-Bu, F, Cl, Br, CN, CF3 and NO2;
E is selected from the group consisting of H, OH, OMe, SH, SMe, COOH, NH2, Me, Et, i-Pr, Pr, t-Bu, Bu, i-Bu, F, Cl, Br, CN, CF3 and NO2;
F is selected from the group consisting of H, OH, OMe, SH, SMe, COOH, NH2, Me, Et, i-Pr, Pr, t-Bu, Bu, i-Bu, F, Cl, Br, CN, CF3 and NO2; and
G is selected from the group consisting of H, OH, OMe, SH, SMe, COOH, NH2, Me, Et, i-Pr, Pr, t-Bu, Bu, i-Bu, F, Cl, Br, CN, CF3 and NO2;
and wherein substituents F and G can form together an additional five-membered ring, where F and G are nitrogen atoms.

**6.** Use according to claim 5, wherein the compound is selected from the group consisting of

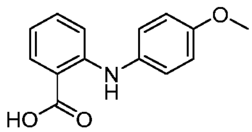, 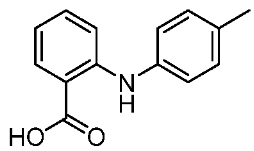, 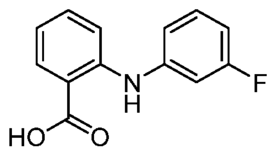

and

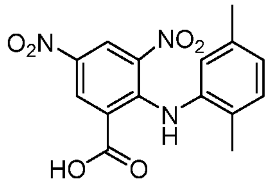.

**7.** The use according to any one of claims 4 to 6, wherein the plant pathogen is selected from the group consisting of *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f. teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies* and *Streptomyces scabiei.*

**8.** The use according to any one of claims 4 to 6, wherein the plant disease is selected from the group consisting of root rot, downy mildew, take-all plant disease, tulip fire, chocolate spot disease, *Galanthius nivalis,* anthracnose,

blue stain, blackleg disease, net blotch including spot form (SFNB) and net form (NFNB), tan spot, soft rot, blight including early blight and late blight, fire blight, scab and common scab.

**9.** The use according to any one of claims 4 to 6, wherein the compound is used for the prevention of potato blight caused by the pathogen *Phytophthora infestans*.

**10.** A method for protecting a plant against a plant disease caused by a plant pathogen that expresses an NLP protein, comprising the step of: applying a compound as defined in any one of claims 1 to 3 to a plant in need thereof.

**11.** The method according to claim 10, wherein the plant disease is selected from the group consisting of root rot, downy mildew, take-all plant disease, tulip fire, chocolate spot disease, *Galanthius nivalis,* anthracnose, blue stain, blackleg disease, net blotch including spot form (SFNB) and net form (NFNB), tan spot, soft rot, blight including early blight and late blight, fire blight, scab and common scab.

**12.** A method for controlling the growth of a plant pathogen expressing an NLP protein, comprising the step of: applying a compound as defined in any one of claims 1 to 3 to a plant in need thereof.

**13.** The method according to any one of claims 10 to 12, wherein the plant pathogen is selected from the group consisting of *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f. teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies and Streptomyces scabiei.*

**Patentansprüche**

**1.** Verwendung einer Verbindung der Formel (I) als Inhibitor von NLP-Proteinen

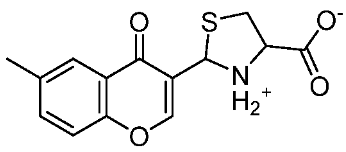

(**I**)

.

**2.** Verwendung einer Verbindung der Formel (II) als Inhibitor von NLP-Proteinen

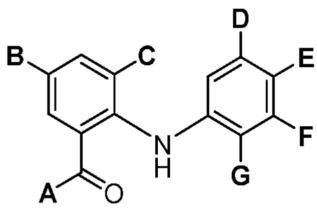

(**II**)

,

wobei:

A ausgewählt ist aus der Gruppe bestehend aus OH,

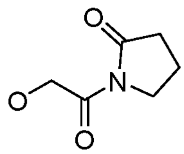, 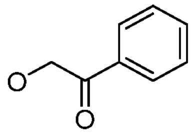,

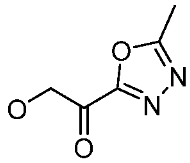, 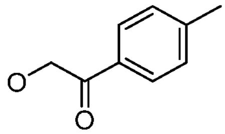

und

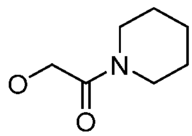;

B ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
C ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
D ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
E ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
F ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2; und
G ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
und wobei die Substituenten F und G zusammen einen zusätzlichen fünfgliedrigen Ring bilden können, wobei F und G Stickstoffatome sind.

**3.** Verwendung nach Anspruch 2, wobei die Verbindung ausgewählt ist aus der Gruppe bestehend aus

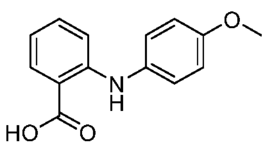, 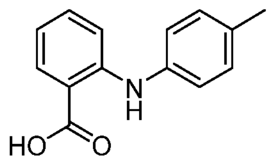, 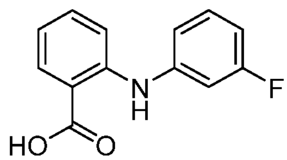

und

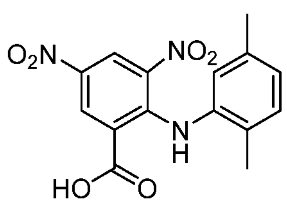.

**4.** Verwendung einer Verbindung der Formel (I) zur Vorbeugung einer Pflanzenkrankheit, welche durch einen Pflanzenpathogen verursacht wird, der ein NLP-Protein exprimiert

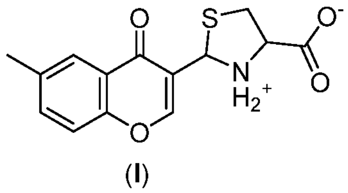

(I)

.

**5.** Verwendung einer Verbindung der Formel (II) zur Vorbeugung einer Pflanzenkrankheit, welche durch einen Pflanzenpathogen verursacht wird, der ein NLP-Protein exprimiert

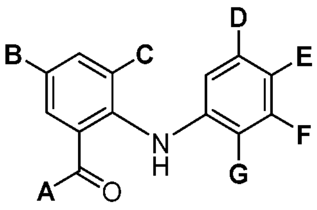

(II)

,

wobei:

A ausgewählt ist aus der Gruppe bestehend aus OH,

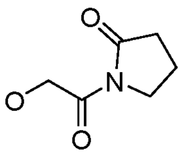

,

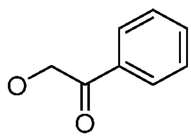

,

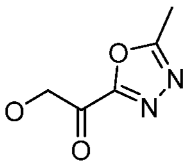

,

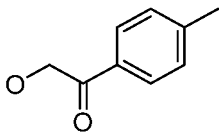

und

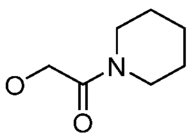

;

B ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
C ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
D ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
E ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2;
F ausgewählt ist aus der Gruppe bestehend aus H, OH, OMe, SH, SMe, COOH, NH2, Me, Et, i-Pr, Pr, t-Bu, Bu, i-Bu, F, Cl, Br, CN, CF3 und NO2; und
G ausgewählt ist aus der Gruppe bestehend aus H, OH, OMe, SH, SMe, COOH, NH2, Me, Et, i-Pr, Pr, t-Bu,

Bu, i-Bu, F, Cl, Br, CN, CF3 und NO2;
und wobei die Substituenten F und G zusammen einen zusätzlichen fünfgliedrigen Ring bilden können, wobei F und G Stickstoffatome sind.

**6.** Verwendung nach Anspruch 5, wobei die Verbindung ausgewählt ist aus der Gruppe bestehend aus

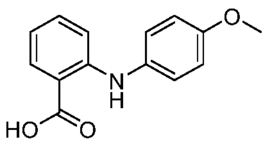 , 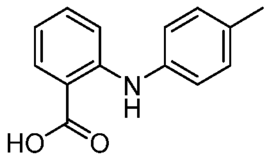 , 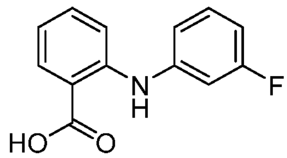

und

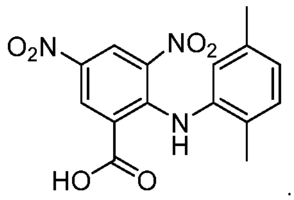 .

**7.** Verwendung nach einem der Ansprüche 4 bis 6, wobei der Pflanzenpathogen ausgewählt ist aus der Gruppe bestehend aus *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f. teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies* und *Streptomyces scabiei.*

**8.** Verwendung nach einem der Ansprüche 4 bis 6, wobei die Pflanzenkrankheit ausgewählt ist aus der Gruppe bestehend aus Wurzelfäule, Falschem Mehltau, Schwarzbeinigkeit, Tulpenfeuer, Schokoladenfleckenkrankheit, *Galanthius nivalis,* Anthracnose, Blaufärbung, Schwarzbeinkrankheit, Netzflecken einschließlich Fleckenform (SFNB) und Netzform (NFNB), Bräunungsfleck, Weichfäule, Seuche einschließlich Frühfäule und Spätfäule, Feuerbrand, Schorf und Gemeiner Schorf.

**9.** Verwendung nach einem der Ansprüche 4 bis 6, wobei die Verbindung zur Vorbeugung der durch den Erreger *Phytophthora infestans* verursachten Kartoffelfäule verwendet wird.

**10.** Verfahren zum Schutz einer Pflanze gegen eine Pflanzenkrankheit, die durch einen Pflanzenpathogen verursacht wird, der ein NLP-Protein exprimiert, umfassend den Schritt: Aufbringen einer Verbindung gemäß einem der Ansprüche 1 bis 3 auf eine Pflanze, die dies benötigt.

**11.** Verfahren nach Anspruch 10, wobei die Pflanzenkrankheit ausgewählt ist aus der Gruppe bestehend aus Wurzelfäule, Falschem Mehltau, Schwarzbeinigkeit, Tulpenfeuer, Schokoladenfleckenkrankheit, *Galanthius nivalis,* Anthracnose, Blaufärbung, Schwarzbeinkrankheit, Netzflecken einschließlich Fleckenform (SFNB) und Netzform (NFNB), Bräunungsfleck, Weichfäule, Seuche einschließlich Frühfäule und Spätfäule, Feuerbrand, Schorf und Gemeinem Schorf.

**12.** Verfahren zum Steuern des Wachstums eines Pflanzenpathogens, das ein NLP-Protein exprimiert, umfassend den Schritt: Aufbringen einer Verbindung gemäß einem der Ansprüche 1 bis 3 auf eine Pflanze, die dies benötigt.

**13.** Verfahren nach einem der Ansprüche 10 bis 12, wobei der Pflanzenpathogen ausgewählt ist aus der Gruppe bestehend aus *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f. teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies und Streptomyces scabiei.*

## Revendications

**1.** Utilisation d'un composé de formule (I) comme inhibiteur des protéines NLP

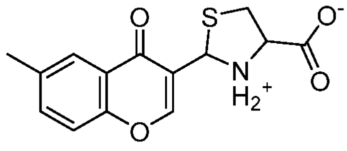

(I) .

**2.** Utilisation d'un composé de formule (II) comme inhibiteur des protéines NLP

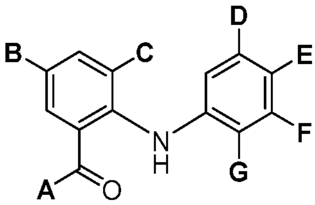

(II) ,

où:

A est choisi dans le groupe constitué par OH,

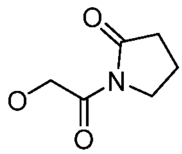 , 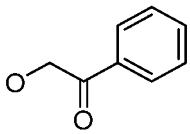 ,

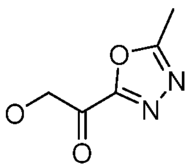 , 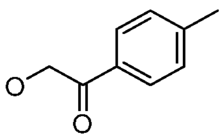 et 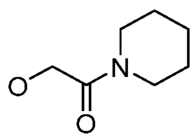 ;

B est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
C est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
D est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
E est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
F est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2; et
G est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
et dans lequel les substituants F et G peuvent former ensemble un cycle à cinq chaînons supplémentaire, où F et G sont des atomes d'azote.

**3.** Utilisation selon la revendication 2, dans laquelle le composé est choisi dans le groupe constitué par

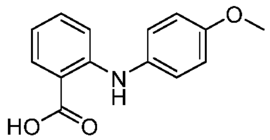 , 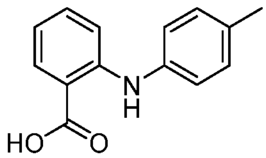 , 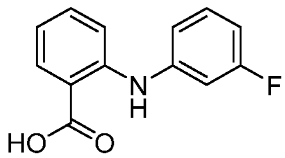

et

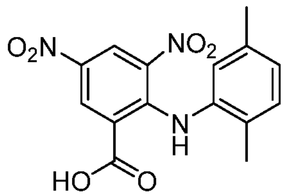 .

**4.** Utilisation d'un composé de formule (I) pour la prévention de la maladie des plantes qui est causée par un pathogène de plante qui exprime une protéine de NLP

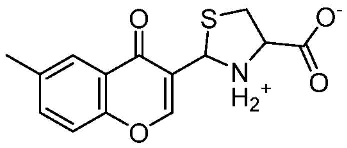

(**I**) .

**5.** Utilisation d'un composé de formule (II) pour la prévention de la maladie des plantes qui est causée par un pathogène de plante qui exprime une protéine de NLP

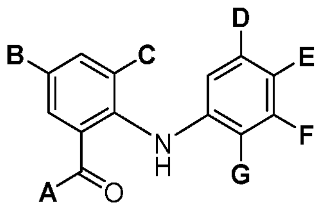

(**II**) ,

où:

A est choisi dans le groupe constitué par OH,

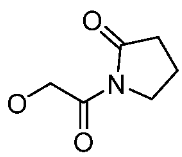 , 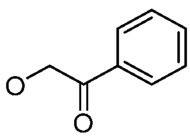 ,

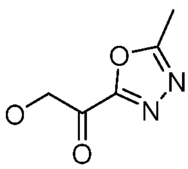 , 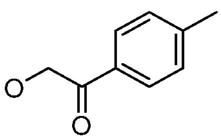

et

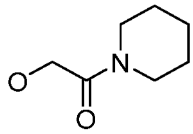

;

B est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
C est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
D est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
E est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
F est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2; et
G est choisi dans le groupe constitué par H, OH, OMe, SH, SMe, COOH, NH2, Me, Et, i-Pr, Pr, t-Bu, Bu, i-Bu, F, Cl, Br, CN, CF3 et NO2;
et dans lequel les substituants F et G peuvent former ensemble un cycle à cinq chaînons supplémentaire, où F et G sont des atomes d'azote.

**6.** Utilisation selon la revendication 5, dans laquelle le composé est choisi dans le groupe constitué par

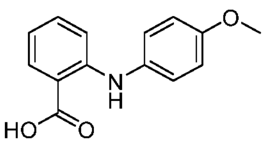

,

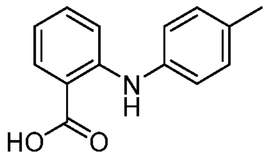

,

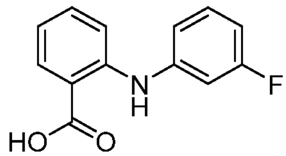

et

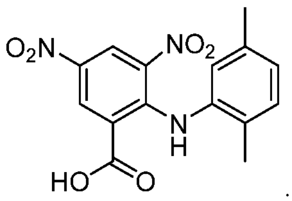

.

**7.** Utilisation selon l'une quelconque des revendications 4 à 6, dans laquelle le pathogène de plante est choisi dans le groupe constitué de *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies* et *Streptomyces scabiei.*

**8.** Utilisation selon l'une quelconque des revendications 4 à 6, dans laquelle la maladie des plantes est choisie dans le groupe constitué par la pourriture des racines, le mildiou, take-all maladies des plantes, le feu de la tulipe, la maladie de la tâche chocolat, *Galanthius nivalis*, l'anthracnose, le bleuissement, maladie de la jambe noire, tâche nette y compris forme tachetée (SFNB) et forme nette (NFNB), tâche de bronzage, pourriture molle, brûlure y compris brûlure hâtive et brûlure tardive, feu bactérien, gale et gale commune.

**9.** Utilisation selon l'une quelconque des revendications 4 à 6, dans laquelle le composé est utilisé pour la prévention de la brûlure de la pomme de terre causée par le pathogène *Phytophthora infestans.*

**10.** Procédé pour protéger une plante contre une maladie des plantes causée par un pathogène de plante qui exprime une protéine NLP, comprenant l'étape consistant à: appliquer un composé tel que défini dans l'une quelconque des revendications 1 à 3 à une plante qui en a besoin.

**11.** Procédé selon la revendication 10 , dans lequel la maladie des plantes est choisie dans le groupe constitué par la pourriture des racines, le mildiou, take-all maladies des plantes, le feu de la tulipe, la maladie de la tâche chocolat, *Galanthius nivalis*, l'anthracnose, le bleuissement, maladie de la jambe noire, tâche nette y compris forme tachetée (SFNB) et forme nette (NFNB), tâche de bronzage, pourriture molle, brûlure y compris brûlure hâtive et brûlure tardive, feu bactérien, gale et gale commune.

**12.** Procédé pour contrôler la croissance d'un pathogène de plante qui exprime une protéine NLP, comprenant l'étape consistant à: appliquer un composé tel que défini dans l'une quelconque des revendications 1 à 3 à une plante qui en a besoin.

**13.** Procédé selon l'une quelconque des revendications 10 à 12, dans lequel le pathogène de plante est choisi dans le groupe constitué de *Phytophthora infestans, Phytophthora cinnamomi, Plasmopara viticola, Gaeumannomyces graminis var. tritici, Botrytis tulipae, Botrytis fabae, Botrytis galanthina, Colletotrichum graminicola, Colletotrichum higginsianum, Grosmannia clavigera, Leptosphaeria maculans, Phaeosphaeria nodorum, Pyrenophora teres f teres, Pyrenophora tritici-repentis, Verticillium albo-atrum, Dickeya dadantii, Dickeya zeae, Erwinia amylovora, Erwinia billingia, Pectobacterium cypripedii, Streptomyces acidoscabies* et *Streptomyces scabiei.*

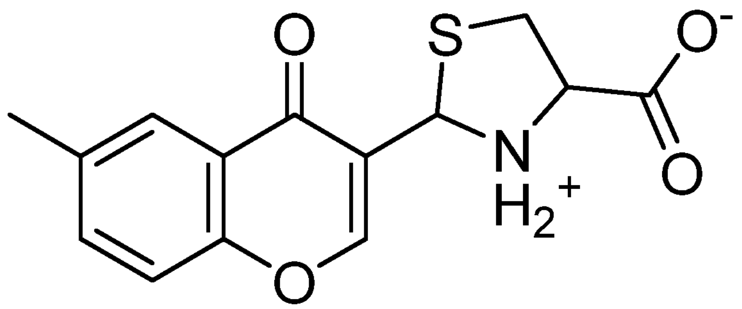

(I)

Figure 1

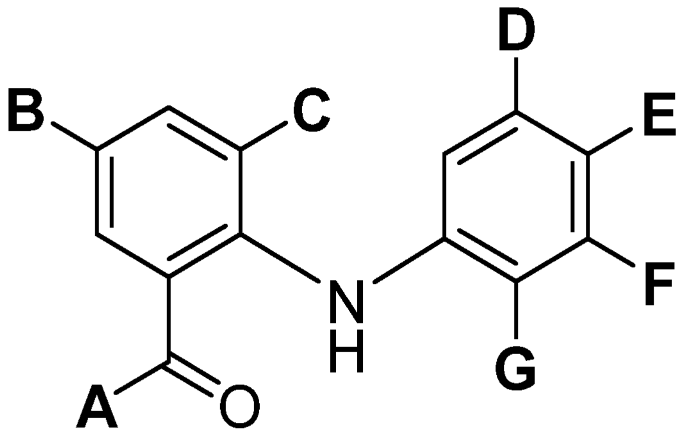

(II)

Figure 2

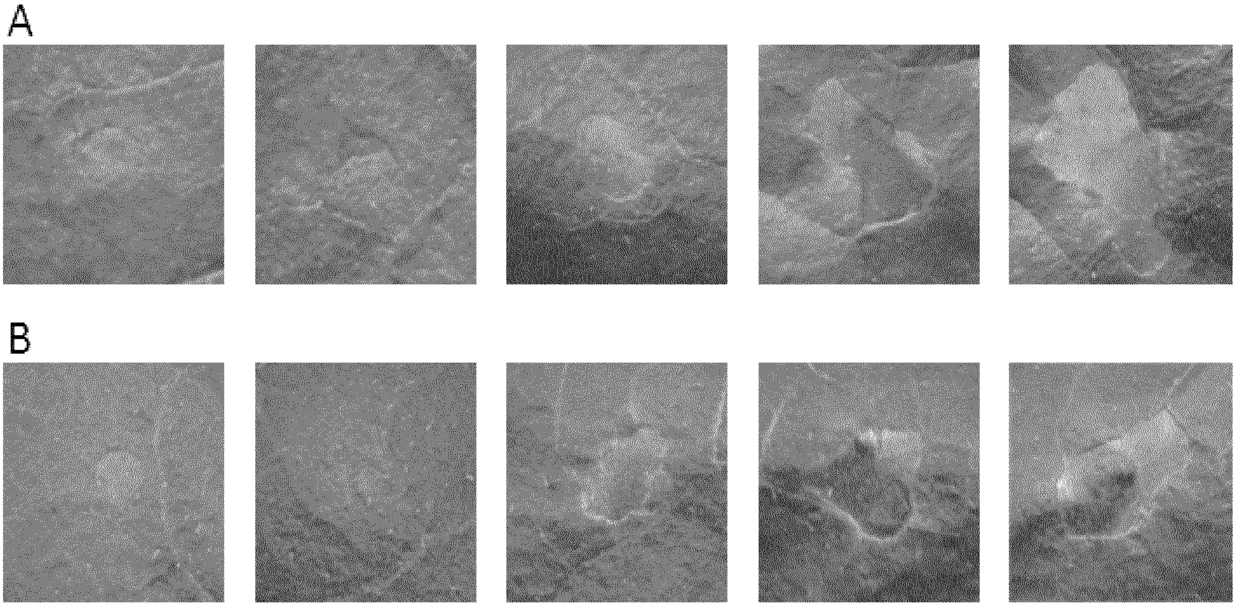


Figure 3

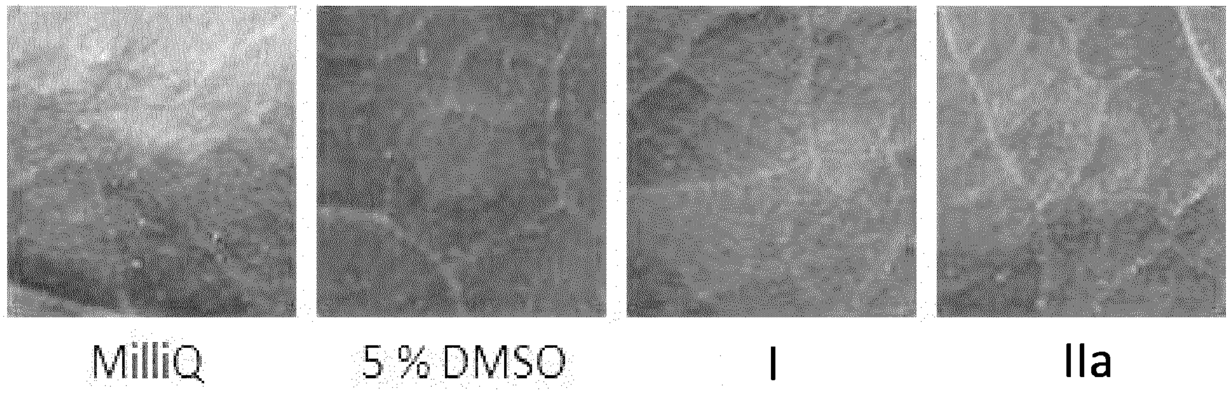


Figure 4

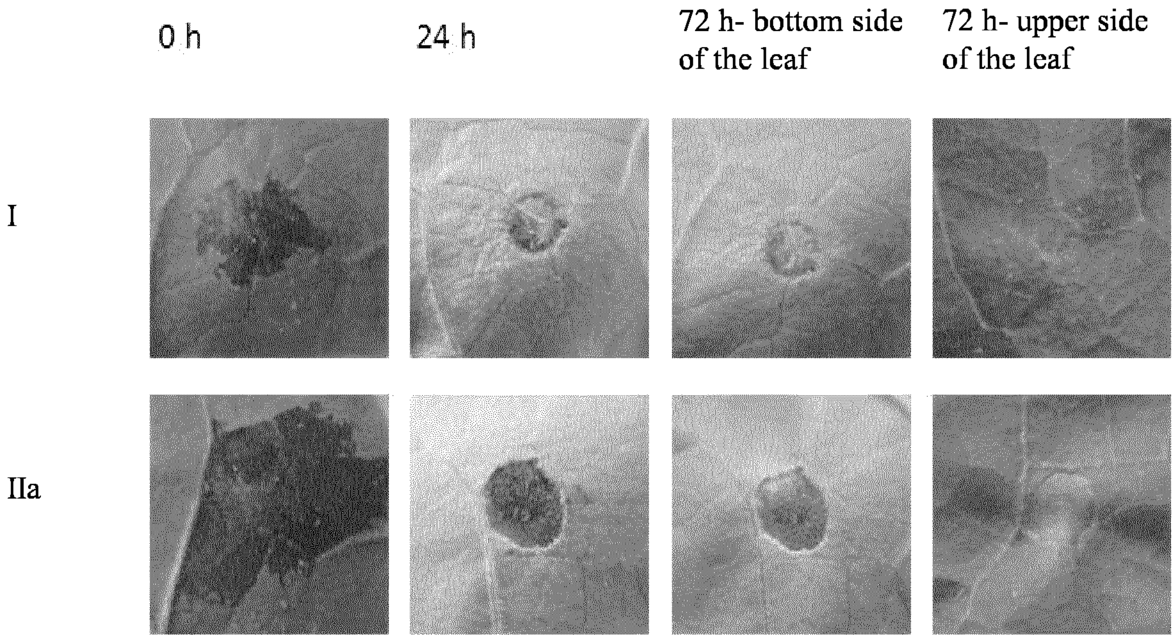
0 h
24 h
72 h- bottom side of the leaf
72 h- upper side of the leaf
I
IIa

Figure 5

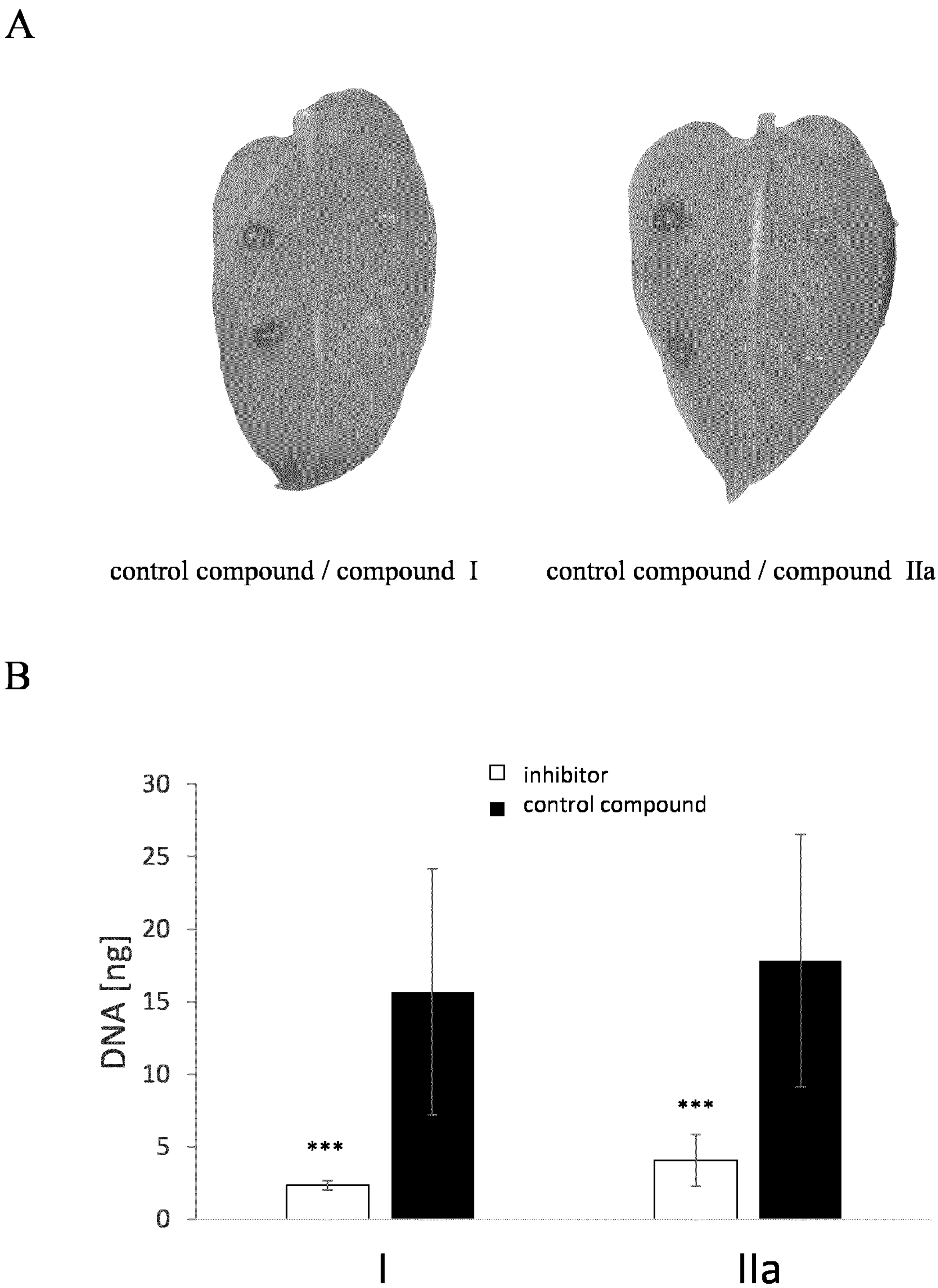
A
control compound / compound I
control compound / compound IIa
B
inhibitor
control compound
DNA [ng]
30
25
20
15
10
5
0
***
***
I
IIa

Figure 6

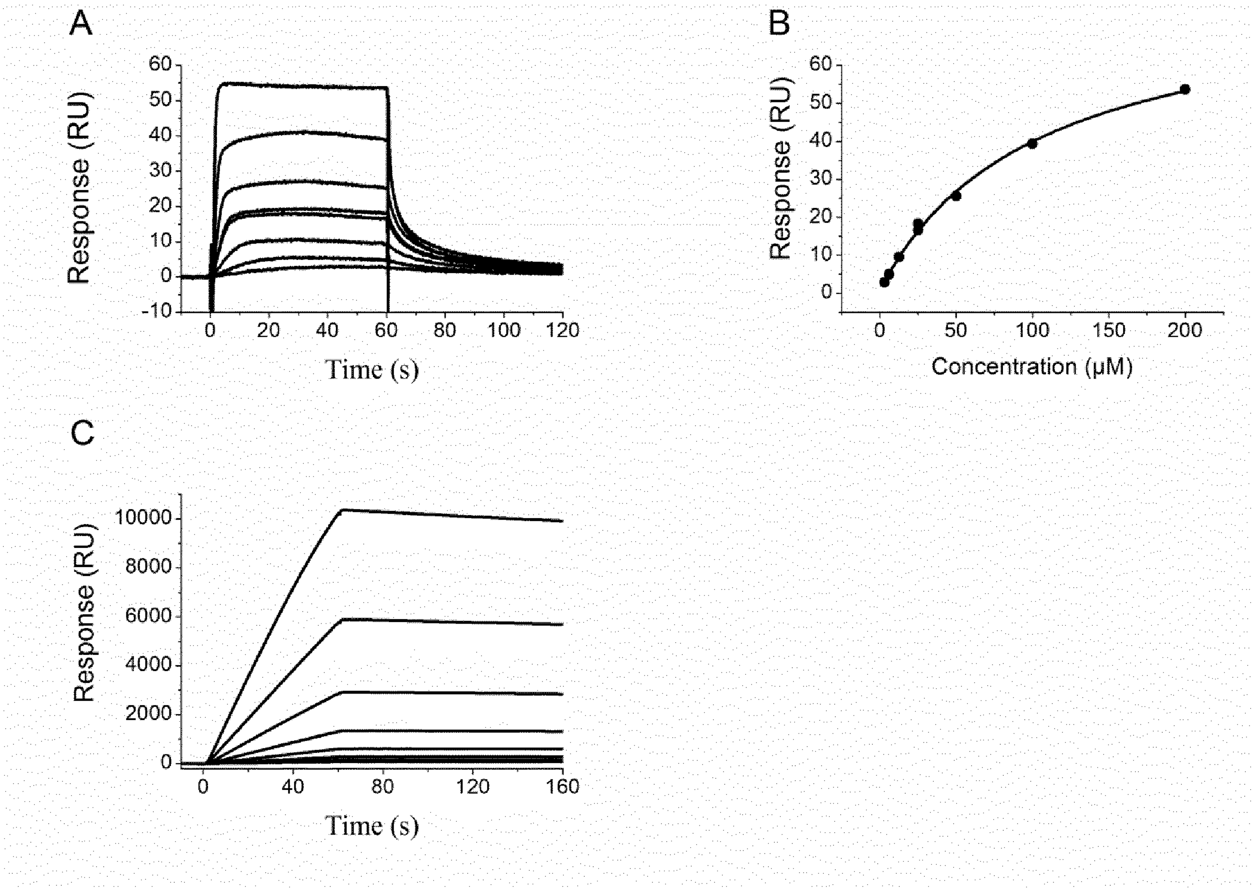
A
Response (RU)
Time (s)
B
Response (RU)
Concentration (μM)
C
Response (RU)
Time (s)

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **GIJZEN et al.** *Phytochemistry,* 2006, vol. 67 (16), 1800-7
- **OTTMANN et al.** *Proc Natl Acad Sci U S A,* 2009, vol. 106 (25), 10359-64
- **JENNINGS et al.** *Plant Sci,* 2001, vol. 161, 891-899
- **AGRIOS.** Plant Pathology. 2005
- **ZAPAROLLI et al.** *Biochemistry,* 2011, vol. 50 (45), 9901-10
- **LLORENTE et al.** *Lett Appl Microbiol,* 2010, vol. 1 (6), 603-10
- **HAAS et al.** *Nature,* 2009, vol. 461 (7262), 393-8

SEQUENCE LISTING

<110> Kemijski institut Univerza v Ljubljani Eberhard Karls Universität Tübingen

<120> Inhibitors of NLP proteins as phytopharmaceuticals for plant pathogen control

<130> KI01P001EP

<160> 2

<170> PatentIn version 3.5

<210> 1
<211> 20
<212> DNA
<213> Artificial Sequence

<220>
<223> PCR primer

<400> 1
caattcgcca ccttcttcga 20

<210> 2
<211> 20
<212> DNA
<213> Artificial Sequence

<220>
<223> PCR primer

<400> 2
gccttcctgc cctcaagaac 20